Europäisches Patentamt

European Patent Office

Office européen des brevets

(19)

(11) Numéro de publication: **0 235 002**
**B1**

(12) **FASCICULE DE BREVET EUROPEEN**

(45) Date de publication du fascicule du brevet: **16.01.91**

(51) Int. Cl.⁵: **H 04 N 3/15**

(21) Numéro de dépôt: **87400203.3**

(22) Date de dépôt: **29.01.87**

(54) Senseur opto-électronique à transfert de charges.

(30) Priorité: **07.02.86 FR 8601714**

(43) Date de publication de la demande:
**02.09.87 Bulletin 87/36**

(45) Mention de la délivrance du brevet:
**16.01.91 Bulletin 91/03**

(84) Etats contractants désignés:
**CH DE ES GB IT LI NL SE**

(56) Documents cités:
**FR-A-2 566 219**
**US-A-4 245 164**

(73) Titulaire: **AEROSPATIALE SOCIETE NATIONALE INDUSTRIELLE Société Anonyme dite:**
**37, Boulevard de Montmorency**
**F-75016 Paris (FR)**

(72) Inventeur: **Grenier, Gilles**
**17 Allée du Parc de la Bièvre**
**F-94240 L'Hay-les-Roses (FR)**
Inventeur: **Merle, Jean-Pierre**
**12, Allée Orée du Bois**
**F-91400 Orsay (FR)**
Inventeur: **Zribi, Robert**
**4, rue Houdart de Lamotte**
**F-75015 Paris (FR)**

(74) Mandataire: **Bonnetat, Christian et al**
**CABINET BONNETAT 23, Rue de Léningrad**
**F-75008 Paris (FR)**

Courier Press, Leamington Spa, England.

## Description

La présente invention concerne un senseur opto-électronique à transfert de charges, du type généralement désigné sous le nom de senseur CCD.

On connaît déjà des senseurs opto-électroniques de ce type (voir par exemple FR—A—2 566 219), qui sont constitués par:

—un système optique chargé de former une image optique;

—un détecteur matriciel photosensible à transfert de charges du type à transfert de trame, c'est-à-dire comprenant:

. une zone photosensible, constituée d'une pluralité de lignes d'éléments photosensibles éclairés en totalité par ledit système optique et engendrant une image électrique par intégration des charges électriques engendrées par les photons reçus par lesdits éléments photosensibles, ledit image électrique étant constituée de lignes d'informations électriques d'images;

. une zone de mémoire intermédiaire, constituée d'une pluralité de lignes d'éléments de mémoire et dans laquelle sont transférées lignes à ligne lesdites informations électriques d'images contenues dans les lignes de ladite zone photosensible; et

. un registre de lecture dans lequel les informations électriques d'image correspondant aux lignes de la zone de mémoire intermédiaire sont transférées en parallèle, ledit registre de lecture engendrant un signal vidéo série représentatif de l'image optique reçue par ladite zone photosensible;

—des moyens de mémoire extérieurs audit détecteur matriciel; et

—un séquenceur commandant l'acquisition desdits images électriques par ladite zone photosensible et susceptible de régir de façon indépendante les transferts des lignes d'informations électriques à l'intérieur de ladite zone photosensible, à l'intérieur de ladite zone de mémoire intermédiaire et à l'intérieur dudit registre de lecture, et donc les transferts entre ladite zone photosensible et ladite zone de mémoire intermédiaire, entre ladite zone de mémoire intermédiaire et ledit registre de lecture et entre ledit registre de lecture et lesdits moyens de mémoire extérieurs.

Dans ces senseurs connus, une image formée sur ladite zone photosensible est transférée dans ladite zone de mémoire intermédiaire, lue ensuite par ledit registre de lecture, puis stockée dans lesdits moyens de mémoire extérieurs.

Ainsi, la fréquence de prise des images est limitée par le temps de lecture desdits senseurs: en effet, une image ne peut être prise qu'après la fin de la lecture de l'image précédente.

Or, il serait avantageus, pour certaines utilisations de tels senseurs, de pouvoir prendre au moins deux images successives dont la proximité temporelle serait inférieure au temps de lecture de ces senseurs.

Aussi, l'objet de la présente invention est-il de réaliser un senseur optique à transfert de charges permettant la prise de plusieurs images successives temporellement très proches.

A cette fin, selon l'invention, le senseur optique du type décrit ci-dessus est remarquable en ce que ledit séquenceur:

—commande l'acquisition successive par ladite zone photosensible d'une pluralité d'images;

—transfère dans ladite zone de mémoire intermédiaire, après formation de chacune desdites images, une partie de cette image constituée d'un nombre de lignes inférieur ou au plus égal au rapport entre le nombre de lignes de ladite zone de mémoire intermédiaire et ledit nombre desdites images;

—accumule lesdites images partielles dans ladite zone de mémoire intermédiaire; et

—commande, par l'intermédiaire dudit registre de lecture, le transfert en bloc desdites images partielles de ladite zone de mémoire intermédiaire dans lesdits moyens de mémoire extérieurs, ainsi qui la répartition desdites images partielles dans lesdits moyens de mémoire extérieurs.

Ainsi, la présente invention permet la réalisation d'un senseur opto-électronique à transfert de charges (CCD) susceptible de prendre deux ou plusieurs images successives et temporellement très proches, suivie d'une mémorisation commune dans ladite zone de mémoire intermédiaire, dans l'attente d'une lecture différée. La séparation temporelle de ces images est réalisée lors de la lecture par ledit registre, au moment de la mémorisation dans lesdits moyens de mémoire extérieurs, destinés à permettre un traitement ultérieur desdites images. On remarquera que le temps minimal possible entre les prises de deux images successives peut être très court, puis-qu'il correspond au temps du transfert des lignes de la zone photosensible dans la zone de mémoire intermédiaire. Par exemple, si la zone photosensible comporte 144 lignes et si le transfert de ligne peut s'effectuer à 2 MHz, ce temps minimal n'est que de 72,2 microsecondes.

On voit qu'ainsi le senseur opto-électronique selon l'invention est particulièrement adapté pour suivre des phénomènes à fluctuations très rapides. En effet, il permet l'acquisition de deux images de très faible durée d'exposition (par exemple 50 microsecondes) temporellement très proches; par suite, on obtient deux images dont la comparaison permet de détecter un phénomène très bref apparaissant pendant la prise de l'une d'elles.

Afin de pouvoir bénéficier de ce très faible temps minimal possible entre la prise de deux images successives, suivant une autre particularité de la présente invention, ledit séquenceur commande l'acquisition, par ladite zone photosensible, de la première desdites images pendant l'intervalle de temps séparant, dans la remise à zéro dudit détecteur matriciel photosensible, la fin de la remise à zéro de ladite zone photosensible et la fin de la remise à zéro de ladite zone de mémoire intermédiaire.

Il est particulièrement avantageux que ladite zone photosensible soit pourvue, au moins à sa frontière avec ladite zone de mémoire intermédiaire, d'un système d'anti-éblouissement incorporé et que, lors du transfert des lignes d'informations d'image de ladite zone photosensible dans ladite zone de mémoire intermédiaire, ledit séquenceur commande le transfert de lignes aussi bien dans ladite zone photosensible que dans ladite zone de mémoire intermédiaire pour ces lignes d'informations correspondant à une image partielle, mais bloque le transfert des lignes dans ladite zone de mémoire intermédiaire tout en commandant ce transfert de lignes dans ladite zone photosensible pour les lignes d'information n'appartenant pas à cette image partielle.

Ainsi, les charges parasites n'appartenant pas à cette image partielle sont éliminées et, seule, ladite image partielle est transférée dans ladite zone de mémoire intermédiaire.

On sait que ces systèmes d'anti-éblouissement, encore appelés systèmes d'anti-blooming, sont constitués de drains ou de diodes et sont chargés, dans les senseurs CCD connus, d'évacuer des charges excédentaires. Dans le cadre de l'invention, le système d'anti-éblouissement, associé à une commande sélective des transferts dans la zone photosensible et dans la zone de mémoire intermédiaire, permet le transfert des seules informations d'images partielles.

Dans un mode de réalisation avantageux, le senseur opto-électronique conforme à la présente invention comporte une unité de traitement extérieure, incorporant lesdits moyens de mémoire extérieurs et engendrant les paramètres d'acquisition desdites images, paramètres que ladite unité de traitement extérieure adresse audit séquenceur. Ces paramètres d'acquisition des images sont par exemple la durée d'exposition pour chaque image, la synchronisation des prises des images, la synchronisation de la lecture de la zone intermédiaire, etc... Ils peuvent concerner également la validation d'une zone particulière d'une image partielle par le séquenceur d'une zone particulière d'une image partielle par le séquenceur, afin de limiter le nombre des points images à mémoriser et à traiter.

Par ailleurs, il est avantageux de réaliser le séquenceur du senseur selon l'invention de façon programmable, afin que celui-ci puisse fonctionner soit de la manière décrite ci-dessus conformément à l'invention, soit de façon connue avec lecteur immédiate de la zone de mémoire intermédiaire dès qu'une image y a été transférée depuis la zone photosensible.

On remarquera que pour accélérer la remise à zéro de la zone de mémoire intermédiaire, il est éventuellement possible de compacter, de façon connue, plusieurs lignes dans le registre de lecture, avant lecture de ladite zone.

Les figures du dessins annexé feront bien comprendre comment l'invention peut être réalisée. Sur ces figures, des références identiques désignent des éléments semblables.

La figure 1 est le schéma synoptique d'un exemple de réalisation du senseur optique à transfert de charges conforme à l'invention, destiné à la prise de deux images successives.

La figure 2 est un chronogramme partiel du fonctionnement du senseur optique de la figure 1.

Les figures 3a à 3e illustrent schématiquement l'état du détecteur matriciel à transfert de charges du senseur optique de la figure 1, à plusieurs instants du chronogramme de la figure 2.

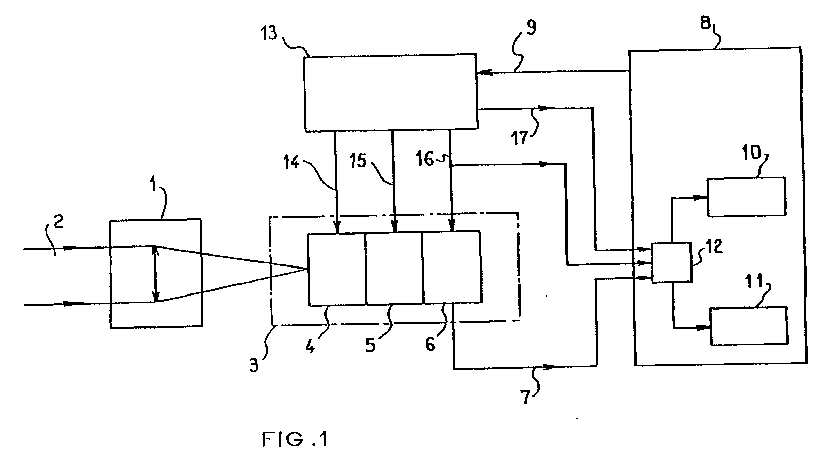

Le senseur optique à transfert de charges, conforme à l'invention et montré schématiquement sur la figure 1, est constitué par:

—un système optique 1, recevant un faisceau lumineux 2 en provenance d'un objet (non représenté) et susceptible de former une image optique dudit objet.

—un détecteur matriciel photosensible 3 à transfert de charges, du type CCD connu à transfert de trame, et à système d'anti-éblouissement lui-même formé par:

. une zone photosensible 4, qui est constituée d'une pluralité de lignes d'éléments photosensibles et sur la totalité desquelles ledit système optique 1 forme ladite image; cette zone photosensible 4 est apte à intégrer les charges électriques engendrées par les photons de ladite image pour engendrer des informations d'image sous forme électrique;

. une zone de mémoire intermédiaire 5, qui est constituée d'une pluralité de lignes d'éléments de mémoire et dans laquelle sont transférées ligne à ligne lesdites informations électriques d'image contenues dans les lignes de ladite zone photosensible; et

. un registre de lecture 6, dans lequel les informations électriques d'image correspondant à chaque ligne de la zone de mémoire intermédiaire 5 sont transférées en parallèle, ledit registre de lecture 6 engendrant, à sa sortie 7, un signal vidéo représentatif de l'image reçue du système optique 1 par la zone photosensible 4;

—une unité de traitement 8, extérieure audit détecteur matriciel 3 et engendrant, à sa sortie 9, les paramètres définissant l'acquisition des images, tels que durée d'exposition des images, synchronisation des prises des images, synchronisation de la lecture, etc...;

—deux mémoires 10 et 11 dont l'accès est commandé par un dispositif de commande commun 12; les mémoires 10 et 11 et le dispositif 12 sont extérieurs du détecteur matriciel 3 et sont avantageusement incorporés à l'unité de traitement 8; et

—un séquenceur 13 recevant de la sortie 9 de l'unité de traitement 8 lesdits paramètres d'acquisition des images et chargé de commander la prise d'image par la zone photosensible 4 et de régir les transferts d'informations.

A cet effet, le séquenceur 13 comporte notamment:

. une sortie 14 sur laquelle apparaît un signal adressé à la zone photosensible 4 et destiné à faire progresser ligne par ligne les informations électriques d'image à l'intérieur de ladite zone photosensible 4 en direction de la zone de mémoire intermédiaire 5;

. une sortie 15 sur laquelle apparaît un signal adressé à la zone de mémoire intermédiaire 5 et destiné à faire progresser ligne par ligne les informations électriques d'image à l'intérieur de ladite zone de mémoire intermédiaire 5 en direction dudit registre de lecture 6;

. une sortie 16 sur laquelle apparaît un signal adressé au registre de lecture 6 et destinée à commander celui-ci pour qu'il adresse aux mémoires 10 et 11, par l'intermédiaire de sa sortie 7 et du dispositif de commande 12, un signal vidéo série à partir des informations parallèle qu'il reçoit de la zone de mémoire intermédiaire 5. Par ailleurs, la sortie 16 est également reliée audit dispositif de commande 12 desdites mémoires 10 et 11; et

. une sortie 17 sur laquelle apparaît un signal de validation adressé audit dispositif de commande 12.

Chacun des signaux apparaissant aux sorties 14, 15 et 16 du séquenceur 13 est constitué d'une suite d'impulsions de fréquence constante, chaque impulsion correspondant à un passage d'une ligne à la suivante (pour les zones 4 et 5) ou à la transformation d'une ligne parallèle en une ligne série (pour le registre de lecture 6).

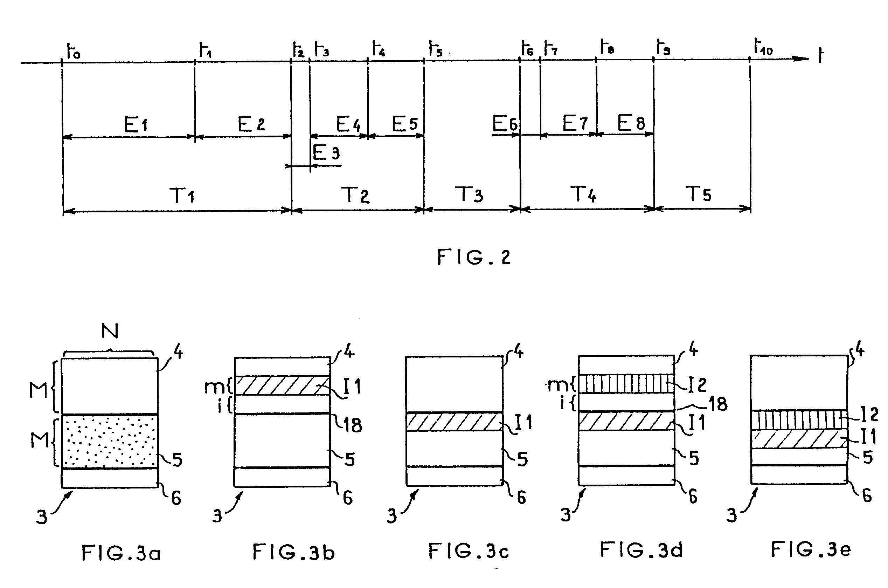

Le fonctionnement du senseur conforme à l'invention est expliqué ci-après, à l'aide du chronogramme de la figure 2 et des schémas des figures 3a à 3e. Sur ces derniers schémas, on a supposé que chacune des zones photosensible 4 et de mémoire 5 comportait M lignes de N éléments photosensibles ou de mémoires, respectivement.

Ce fonctionnement comporte cinq phases principales, respectivement référencées T1 à T5 sur le chronogramme de la figure 2.

A) Phase T1

Cette première phase s'étend de l'instant initial t0 à un instant t2 et elle correspond à la remise à zéro du détecteur 3, ainsi qu'à la prise d'une première image. Elle se subdivise en deux étapes consécutives, à savoir:

. une première étape E1 s'étendant de l'instant initial t0 à un instant t1, antérieur à t2. Pendant cette étape E1, le séquenceur 13 émet des signaux à chacune de ses sorties 14, 15 et 16. Par suite:

—les M lignes de la zone photosensible 4 sont transférées ligne à ligne dans la zone de mémoire intermédiaire 5;

—les M lignes de la zone de mémoire intermédiaire 5 sont transférées ligne à ligne dans le registre de lecture 6;

—le registre de lecture 6 émet à sa sortie 7, sous forme série, un signal vidéo constitué des informations contenues initialement dans la zone de mémoire intermédiaire 5. Aucun signal de validation n'apparaît à la sortie 17 du séquenceur 13, de sorte que ce signal vidéo n'est pas pris en compte par le dispositif de commande 12 et n'est pas enregistré dans l'une ou l'autre des mémoires 10 ou 11.

A la fin de cette première étape E1, c'est-à-dire à l'instant t1, la zone photosensible 4 est entièrement vidée des informations qu'elle contenait, alors que la zone de mémoire intermédiaire 5 est en cours de vidage et de lecture (par le registre 6) des informations qui étaient contenues initialement dans la zone photosensible 4 et qui y ont été transférées pendant l'étape E1.

La figure 3a illustre schématiquement l'état du détecteur 3 à l'instant t1. Sur cette figure, la zone de mémoire intermédiaire 5 en cours de vidage a été pointillée.

. une seconde étape E2 s'étendant de l'instant t1 à l'instant t2, auquel se termine la phase T1. Pendant cette seconde étape E2, le séquenceur 13 continue d'émettre des signaux à ses sorties 15 et 16, mais n'émet plus aucun signal sur sa sortie 14. Par suite:

—le vidage de la zone de mémoire intermédiaire 5 se poursuit dans les mêmes conditions que celles décrites précédemment dans la première étape E1;

—il se forme dans la zone photosensible 4 une image intégrée pendant l'intervalle de temps t2-t1 et recouvrant la totalité de la zone photosensible 4. De cette image, selon l'invention, on ne retiendra qu'une première image partielle I1 occupant $m$ lignes de ladite zone photosensible, avec $m \leqslant M/2$.

A la fin de cette seconde étape E2, c'est-à-dire à l'instant t2, la zone de mémoire intermédiaire 5 est complètement vidée, alors que la zone photosensible 4 comporte une image, dont la partie intéressante constituant ladite première image partielle I1, est séparée de la zone de mémoire intermédiaire 5 par $i$ lignes. La figure 3b illustre schématiquement l'état du détecteur 3 à l'instant t2. Sur cette figure, seule la partie I1 de l'image contenue dans la zone photosensible 4 à été représentée (par un rectangle hachuré).

B) Phase T2

Cette seconde phase s'étend de l'instant t2 à un instant postérieur t5 et elle correspond à la mémorisation de l'image partielle I1 dans la zone de mémoire intermédiaire 5. Elle se subdivise en trois étapes consécutives, à savoir:

. une première étape E3 s'étendant dudit instant t2 à un instant postérieur t3 et pendant laquelle le séquenceur 13 émet un signal à sa sortie 14, sans émettre sur ses sorties 15 et 16. Par suite, les $i$ lignes de la zone photosensible 4, disposées entre l'image partielle I1 et la zone de mémoire intermédiaire 5 sont avancées pas-à-pas en direction de cette dernière, sans toutefois pouvoir y pénétrer, puisqu'aucun signal de transfert n'est présent sur la sortie 15. Ces $i$ lignes d'accumulent à la frontière 18 entre lesdites zones 4 et 5 et le système d'anti-éblouissement se trouvant à cet endroit évacue les charges desdits lignes. L'avance de ces $i$ lignes est terminée à l'instant t3 et alors l'image partielle I1 est venue en position adjacente à ladite zone de mémoire intermédiaire 5, en restant dans la zone photosensible 4.

. une seconde étape E4 s'étendant de l'instant t3 à un instant postérieur t4 et pendant laquelle le séquenceur 13 émet des signaux sur ses sorties 14 et 15, mais non sur sa sortie 16. Par suite, les *m* lignes de l'image T1 sont transférées pas-à-pas dans la zone de mémoire intermédiaire 5. Le transfert des *m* lignes de l'image I1 est terminé à l'instant t4 et alors l'image I1 est venue en position adjacente à la zone photosensible 4, en étant maintenant disposée dans la zone de mémoire intermédiaire 5.

. une troisième étape E5 s'étendant de l'instant t4 à l'instant t5 auquel se termine ladite phase T2. Pendant cette troisième étape E5, le séquenceur 13 émet un signal à sa sortie 14, mais aucun signal n'apparaît sur ses sorties 15 et 16. Par suite, les *M-m-i* lignes de la zone photosensible 4, disposées initialement du côté de l'image partielle I1 opposé à la zone de mémoire intermédiaire 5, sont transférées en direction de cette dernière. Toutefois, comme il a été décrit précédemment à propos des *i* lignes, ces *M-m-i* lignes s'accumulent à la frontière 18 et leurs charges sont évacuées par le système d'anti-éblouissement puisque le signal 15 n'est pas présent; l'image partielle I1 reste donc dans la position qu'elle occupait à l'instant t4.

L'avance des *M-m-i* lignes précédentes en direction de la zone de mémoire intermédiaire 5 est terminé à l'instant t5.

La figure 3c illustre l'état du détecteur 3 aux instants t4 et t5, la seule différence d'état entre ces instants, étant qu'à l'instant t5 toutes les lignes de la zone photosensible 4 ont été transférées vers la zone de mémoire intermédiaire 5.

C) Phase T3

Cette troisième phase T3 s'étend dudit instant t5 à un instant t6 postérieur. Elle correspond à la prise d'une seconde image.

Comme il a été décrit précédemment, à l'instant t5 la zone photosensible 4 est totalement vidée, de sorte que l'on peut y former une seconde image, intégrée pendant l'intervalle de temps t6-t5. De cette seconde image, comme de la première, on ne gardera qu'une image partielle I2 occupant *m* lignes de ladite zone photosensible 4 et séparée de la zone de mémoire intermédiaire 5 par *i* lignes.

La figure 3d illustre l'état du détecteur 3 à l'instant t6. Sur cette figure, seule la seconde image partielle I2 a été représentée par un rectangle à hachures droites, à l'exclusion du reste de l'image formée.

Pendant la phase T3, le séquenceur 13 n'émet aucun signal à ses sorties 14, 15 et 16. Il en résulte notamment que la première image I1 reste dans la position qu'elle occupait déjà aux instants t4 et t5.

D) Phase T4

Cette quatrième phase s'étend de l'instant t6 à un instant postérieur t9 et elle correspond à la mémorisation de la seconde image partielle I2 dans la zone de mémoire intermédiaire 5. Elle se subdivise en trois étapes consécutives E6, E7 et E8, respectivement semblables aux étapes E3, E4 et E5 de la seconde phase T2.

En effet:

. la première étape E6 de la phase T4 s'étend de l'instant t6 à un instant postérieur t7 et, pendant cette première étape, le séquenceur 13 émet un signal à sa sortie 14, alors qu'aucun signal n'est présent aux sorties 15 et 16. Par suite, les *i* lignes de la zone photosensible 4, disposées entre l'image I2 et la zone de mémoire intermédiaire 5 sont avancées pas-à-pas vers cette dernière et leurs charges sont évacuées par le système d'anti-éblouissement de la frontière 18. L'avance de ces *i* lignes est terminée à l'instant t7 et alors la seconde image partielle I2 est venue en position adjacente à ladite zone de mémoire intermédiaire 5, en restant dans la zone photosensible 4.

Quant à elle, la première image I1, reste dans la position qu'elle occupait déjà aux instants t4, t5 et t6;

. la seconde étape E7 de la phase T4 s'étend de l'instant t7 à un instant postérieur t8 et, pendant cette seconde étape, le séquenceur 13 émet des signaux sur ses sorties 14 et 15, mais non sur sa sortie 16. Par suite, les *m* lignes de la première image partielle I1 sont décalées pas-à-pas, à l'intérieur de la zone de mémoire intermédiaire 5 en direction du registre de lecture 6, tandis que les *m* lignes de la seconde image partielle I2 sont transférées pas-à-pas, de la zone photosensible 4 à la zone de mémoire intermédiaire 5. Le transfert des deux images I1 et I2 est terminé à l'instant t8 et alors ces deux images sont adjacentes l'une à l'autre et toutes deux disposées dans ladite zone de mémoire intermédiaire 5, la seconde image partielle I2 ayant pris la place de la première image partielle I1 et celle-ci ayant été décalée de *m* lignes vers le registre de lecture 6.

La figure 3e illustre les positions des images I1 et I2 à l'instant t8;

. la troisième étape E8 de la phase T4 s'étend de l'instant t8 à l'instant t9, auquel se termine ladite quatrième phase T4. Pendant cette troisième étape E8, le séquenceur 13 émet un signal à sa sortie 14, mais aucun signal n'apparaît sur ses sorties 15 et 16. Par suite, les *M-m-i* lignes de la zone photosensible 4, disposées initialement du côté de l'image I2 opposé à la zone de mémoire intermédiaire 5, sont avancées en direction de cette dernière et leurs charges sont évacuées par le système d'anti-éblouissement de la frontière 18.

A la fin de la troisième étape E8, c'est-à-dire à l'instant t9, le processus de transfert de la zone photosensible 4 vers la zone de mémoire intermédiaire 5 est terminé. Les images partielles I1 et I2 n'ont pas été déplacées et elles occupent toujours la position acquise à l'instant t8 et montrée sur la figure 3e.

E) Phase T5

La cinquième phase T5 s'étend de l'instant t9 à l'instant t10 et correspond à la lecture du contenu de la zone de mémoire intermédiaire 5 par le registre de lecture 6. Pendant cette phase T5, le séquenceur 13 émet des signaux sur ses sorties 15 et 16 de sorte que lesdites images partielles I1

et I2 sont avancées vers le registre 6, puis transférées dans celui-ci, qui les adresse, par sa sortie 7, vers les mémoires 10 et 11. Grâce à la liaison entre la sortie 16 du séquenceur 13 et le dispositif de commande 12, le signal vidéo à ladite sortie 7 du registre de lecture 6 est échantillonné et synchronisé par le signal de lecture apparaissant à la sortie 16. Par ailleurs, le signal de validation, émis par le séquenceur 13 sur sa sortie 17 et adressé au dispositif de commande 12, permet la séparation des deux images partielles I1 et I2, de sorte que l'une, par exemple I1, peut être stockée dans la mémoire 10, tandis que l'autre, par exemple I2, peut être emmagasinée dans la mémoire 11. On voit que les images sont lues et enregistrées dans l'ordre de leur prise.

A la fin de la phase T5, c'est-à-dire à l'instant t10, la mise en mémoire des images partielles I1 et I2 est terminée.

Les images I1 et I2 sont alors mémorisées dans les mémoires 10 et 11 dans l'attente d'une exploitation ultérieure.

On voit ainsi que, grâce à l'invention, on réalise un senseur optique permettant de réaliser deux images successives, sans avoir à effectuer une lecture intermédiaire. Ces deux images peuvent donc être temporellement très proches.

Bien etendu, le fonctionnement du senseur peut être cyclique, avec prise et stockage de deux images à chaque cycle.

## Revendications

1. Senseur opto-électronique à transfert de charges, comprenant:

—un système optique (1) chargé de former une image optique;

—un détecteur matriciel photosensible à transfert de charges (3), du type à transfert de trame, comprenant:

. une zone photosensible (4), constituée d'une pluralité de lignes d'éléments photosensibles éclairés en totalité par ledit système optique (1) et engendrant une image électrique par intégration des charges électriques engendrées par les photons reçus par lesdits éléments photosensibles, ladite image électrique étant constituée par une pluralité de lignes d'informations électriques d'images;

. une zone de mémoire intermédiaire (5), constituée d'une pluralité M de lignes d'éléments de mémoire et dans laquelle sont transférées ligne à ligne lesdites informations électriques d'images contenues dans les lignes de ladite zone photosensible (4); et

. un registre de lecture (6) dans lequel les informations électriques d'image correspondant aux lignes de la zone de mémoire intermédiaire (5) sont transférées en parallèle, ledit registre de lecture (6) engendrant un signal vidéo série représentatif de l'image optique reçue par ladite zone photosensible.

—des moyens de mémoire (10, 11) extérieurs audit détecteur matriciel (3) et

—un séquenceur (13) commandant l'acquisition desdites images électrique par ladite zone photosensible (4) et susceptible de régir de façon indépendante les transferts des lignes d'informations électriques d'images à l'intérieur de ladite zone photosensible (4), à l'intérieur de ladite zone de mémoire intermédiaire (5) et à l'intérieur dudit registre de lecture (6), et donc les transferts entre ladite zone photosensible (4) et ladite zone de mémoire intermédiaire (5), entre ladite zone de mémoire intermédiaire (5) et ledit registre de lecture (6) et entre ledit registre de lecture (6) et lesdits moyens de mémoire (10, 11), caractérisé en ce que ledit séquenceur (13):

—commande l'acquisition successive par ladite zone photosensible (4) d'une pluralité $n$ d'images;

—transfère dans ladite zone de mémoire intermédiaire (5), après formation de chacune desdites images, une partie (I1, I2) de cette image constituée d'un nombre de lignes $m$ inférieur ou au plus égal au rapport M/n entre le nombre M des lignes de ladite zone de mémoire intermédiaire (5) et ledit nombre $n$ desdites images;

—accumule lesdites images partielles (I1, I2) dans ladite zone de mémoire intermédiaire (5); et

—commande, par l'intermédiaire dudit registre de lecture (6), le transfert en bloc desdites images partielles (I1, I2) de ladite zone de mémoire intermédiaire (5) dans lesdits moyens de mémoire extérieurs (10, 11), ainsi que la répartition desdites images partielles dans lesdits moyens de mémoire extérieurs (10, 11).

2. Senseur opto-électronique à transfert de charges selon la revendication 1, caractérisé en ce que ledit séquenceur (13) commande l'acquisition, par ladite zone photosensible (4), de la première desdites images pendant l'intervalle de temps séparant, dans la remise à zéro dudit détecteur matriciel photosensible (3), la fin de la remise à zéro de ladite zone photosensible (4) et la fin de la remise à zéro de ladite zone de mémoire intermédiaire (5).

3. Senseur opto-électronique à transfert de charges selon l'une des revendications 1 ou 2, caractérisé en ce que ladite zone photosensible (4) est pourvue, au moins à sa frontière avec ladite zone de mémoire intermédiaire (5), d'un système d'anti-éblouissement incorporé et en ce que, lors du transfert des lignes d'informations d'image de ladite zone photosensible dans ladite zone de mémoire intermédiaire, ledit séquenceur (13) commande le transfert de lignes aussi bien dans ladite zone photosensible que dans ladite zone de mémoire intermédiaire pour les lignes d'informations correspondant à une image partielle, mais bloque le transfert de lignes dans ladite zone de mémoire intermédiaire tout en commandant le transfert de lignes dans ladite zone photosensible pour les lignes d'informations n'appartenant pas à cette image partielle.

4. Senseur opto-électronique à transfert de charges selon l'une des revendications 1 à 3, caractérisé en ce qu'il comporte une unité de traitement extérieure (8), incorporant lesdits moyens de mémoire extérieurs (10, 11) et engendrant les paramètres d'acquisition desdites images, paramètres que ladite unité de traitement extérieure (8) adresse audit séquenceur (13).

**Patentansprüche**

1. Optoelektronischer Ladungsübertragungssensor, der ein optisches System (1) zum Bilden eines optischen Bildes,

einen zur Rasterübertragung ausgestalteten photosensiblen Ladungübertragungsmatrixdetektor (3) bestehend aus:

einer photosensiblen Zone (4), die aus mehreren in ihrer Gesamtheit vom optischen System (1) beleuchteten Zeilen photosensibler Elemente aufgebaut ist und durch Integration der elektrischen Ladungen, die von den durch die photosensiblen Elemente aufgenommenen Photonen erzeugt werden, ein elektrisches Bild erzeugt wird, das aus mehreren Zeilen elektrischer Bilderinformationen gebildet ist,

einer Zwischenspeicherzone (5), die aus einer Anzahl M Speicherelementenzeilen aufgebaut ist und in die die elektrischen Bilderinformationen, die in den Zeilen der photosensiblen Zone (4) enthalten sind, zeilenweise übertragen werden, und

einem Leseregister (6), in das die den Zeilen der Zone des Zwischenspeichers (5) entsprechenden elektrischen Bilderinformationen parallel übertragen werden und durch das ein Serienvideosignal, das für das von der photosensiblen Zone aufgenommene optische Bild charakteristisch ist, erzeugt wird,

—eine Speichereinrichtung (10, 11) extern oder außerhalb des Matrixdetektors (3) liegend und

—einen Folgeschalter oder Zuordner (13) aufweist, von dem durch die photosensible Zone (4) die Erfassung der elektrischen Bilder gesteuert wird und der befähigt ist, die Übertragungen der Zeilen elektrischer Bilderinformationen zum Innern der photosensiblen Zone (4), zum Inneren der Zwischenspeicherzone (5) sowie zum Innern des Leseregisters (6) und demnach die Übertragungen zwischen der photosensiblen Zone (4) und der Zwischenspeicherzone (5), zwischen der Zwischenspeicherzone (5) und dem Leseregister (6) sowie zwischen dem Leseregister (6) und der Speichereinrichtung (10, 11) zu steuern, dadurch gekennzeichnet, daß der Folgeschalter oder Zuordner (13):

—die sukzessive Erfassung durch die photosensible Zone (4) einer Anzahl $n$ Bilder steuert,

—in die Zwischenspeicherzone (5) nach der Bildung jedes der Bilder einen Teil (I1, I2) des Bildes überträgt, das gebildet ist aus einer Anzahl $m$ Zeilen, die geringer oder höchstens gleich ist gegenüber dem Verhältnis M/n zwischen der Anzahl M Zeilen der Zwischenspeicherzone (5) und der Anzahl $n$ der Bilder,

—die Teilbilder (I1, I2) in der Zwischenspeicherzone (5) ansammelt und

—mit Hilfe des Leseregisters (6) die blockweise Übertragung der Teilbilder (I1, I2) der Zwischenspeicherzone (5) in der externen Speichereinrichtung (10, 11) sowie die Aufteilung der Teilbilder in der externen Speichereinrichtung (10, 11) steuert.

2. Optoelektronicher Ladungübertragungssensor nach Anspruch 1, dadurch gekennzeichnet, daß der Folgeschalter oder Zuordner (13) durch die photosensible Zone (4) die Erfassung des ersten des Bilder während des Zeitintervalls steuert, das bei der Nullung des photosensiblen Matrixdetektors (3) den Abschluß der Nullung der photosensiblen Zone (4) und den Abschluß der Nullung der Zwischenspeicherzone (5) trennt.

3. Optoelektronischer Ladungübertragungssensor nach einem der vorhergehenden Ansprüche 1 oder 2, dadurch gekennzeichnet, daß die photosensible Zone (4) zumindest an ihrer Grenzlinie mit der Zwischenspeicherzone (5) mit einem eingebauten Antibloomingsystem versehen ist und daß anläßlich der Übertragung der Bildinformationenzeilen der photosensiblen Zone in die Zwischenspeicherzone der Folgeschalter oder Zuordner (13) die Zeilenübertragung sowohl in der photosensiblen Zone als auch in der Zwischenspeicherzone für die einem Teilbild entsprechenden Bildinformationenzeilen steuert, jedoch die Zeilenübertragung in der Zwischenspeicherzone sperrt und dabei dennoch die Zeilenübertragung in der photosensiblen Zone für die Informationenzeilen steuert, die nicht diesem Teilbild angehören.

4. Optoelektronischer Ladungsübertragungssensor nach einem der vorhergehenden Ansprüche 1 bis 3, dadurch gekennzeichnet, daß er eine externe Behandlungseinheit (8) aufweist, in der die externe Speichereinrichtung (10, 11) mitenthalten ist und durch die die Erfassungsparameter der Bilder erzeugt werden, wobei die Parameter von der externen Behandlungseinheit (8) an den Folgeschalter oder Zuordner (13) adressiert werden.

**Claims**

1. Charge transfer opto-electronic sensor comprising:

—an optical system (1) for forming an optical image;

—a charge transfer photosensitive matrix detector (3) of the frame transfer type, comprising:

a photosensitive zone (4), constituted by a plurality of lines of photosensitive elements totally illuminated by said optical system (1) and generating an electric image by integration of the electric charges generated by the photons received by said photosensitive elements, said electric image being constituted by a plurality of lines of electric image information;

an intermediate memory zone (5), constituted by a plurality M of lines of memory elements and in which said electric image information contained in the lines of said photosensitive zone (4) are transferred line to line; and

a readout register (6) in which the electric image information corresponding to the lines of the intermediate memory zone (5) are transferred in parallel, said readout register (6) generating a series video signal representative of the optical image received by said photosensitive zone;

—memory means (10, 11) outside said matrix detector (3); and

—a sequencer (13) controlling the acquisition of said electric images by said photosensitive zone (4) and capable of managing in independent manner the transfers of the lines of electric image information within said photosensitive zone (4), within said intermediate memory zone (5) and within said readout register (6), and therefore the transfers between said photosensitive zone (4) and said intermediate memory zone (5), between said intermediate memory zone (5) and said readout register (6) and between said readout register (6) and said memory means (10, 11), characterized in that said sequencer (13):

—controls the successive acquisition by said photosensitive zone (4) of a plurality $n$ of images;

—transfers into said intermediate memory zone (5), after formation of each of said images, a part (I1, I2) of this image constituted by a number of lines $m$ less than or at the most equal to the ratio M/n between the number M of lines of said intermediate memory zone (5) and said number $n$ of said iamges;

—accumulates aid partial images (I1, I2) in said intermediate memory zone (5); and

—controls, via said readout register (6), the complete transfer of said partial images (I1, I2) from said intermediate memory zone (5) into said outside memory means (10, 11), as well as the distribution of said partial images in said outside memory means (10, 11).

2. Charge transfer opto-electronic sensor according to claim 1, characterized in that said sequencer (13) controls the acquisition, by said photosensitive zone (4), of the first of said images during the time gap separating, in the return to zero of said photosensitive matrix detector (3), the end of the return to zero of said photosensitive zone (4) and the end of the return to zero of said intermediate memory zone (5).

3. Charge transfer opto-electronic sensor according to one of claims 1 or 2, characterized in that said photosensitive zone (4) is provided, at least at its boundary with said intermediate memory zone (5), with an anti-glare system incorporated therein, and, in that during transfer of the lines of image information from said photosensitive zone into said intermediate memory zone, said sequencer (13) controls the transfer of lines both in said photosensitive zone and in said intermediate memory zone for the lines of information corresponding to a partial image, but blocks the transfer of lines into said intermediate memory zone whilst controlling the transfer of lines into said photosensitive zone for the lines of information not belonging to this partial image.

4. Charge transfer opto-electronic sensor according to one of claims 1 to 3, characterized in that it comprises an outside processing unit (8), incorporating said outside memory means (10, 11) and generating the parameters of acquisition of said images, parameters that said outside processing unit (8) addresses to said sequencer (13).

FIG .1

FIG. 2

FIG. 3a

FIG. 3b

FIG. 3c

FIG. 3d

FIG. 3e